# EUROPEAN PATENT APPLICATION

(11) **EP 4 427 616 A1**
(43) Date of publication of application: **11.09.2024**
(21) Application number: 21963201.5
(22) Date of filing: 02.11.2021
(51) Int. Cl.: A24F 40/65

(54) **NOTIFICATION CONTROL DEVICE FOR AEROSOL GENERATION DEVICE, NOTIFICATION CONTROL METHOD FOR AEROSOL GENERATION DEVICE, AND CONTROL PROGRAM FOR AEROSOL GENERATION DEVICE**

(71) Applicant: Japan Tobacco Inc., Tokyo 105-6927 (JP)
(72) Inventor: KATO, Masato, Tokyo 130-8603 (JP); SHIMADA, Yurina, Tokyo 130-8603 (JP)
(74) Representative: Hoffmann Eitle
(86) International application number: PCT/JP2021/040461
(87) International publication number: WO 2023/079603

(57) **Abstract**

A notification control device for an aerosol generation device (100) that generates aerosol from an aerosol source by using power from a power supply unit (111). The notification control device obtains deterioration information for the power supply unit (111) and notifies the deterioration information for power supply unit (111) by using a parameter that is different from charge capacity.

## Description

### TECHNICAL FIELD

The present invention relates to a notification control device for an aerosol generating apparatus, a notification control method for the aerosol generating apparatus, and a control program for the aerosol generating apparatus.

### BACKGROUND ART

In recent years, a non-combustion type aerosol generating apparatus (an inhaler) that delivers an aerosol generated by atomizing an aerosol source with a heater to a user is known. Since the heater is heated by electric power stored in a battery, the aerosol generating apparatus is required to appropriately control a heating profile and electric power consumption of the battery.

A rechargeable secondary battery such as a lithium ion battery can be used as the battery of the aerosol generating apparatus. It is known that a charging capacity of the secondary battery decreases (the battery deteriorates) by repeating charging and discharging, or leaving a fully charged state or a battery exhaustion state.

The aerosol generating apparatus performs heating control of the heater by assuming a state in which the charging capacity of the battery is not deteriorated. However, when the capacity of the battery decreases, the precondition is violated, and thus there is a possibility that the assumed heating control cannot be performed according to the capacity of the battery. Therefore, it is necessary to replace the battery depending on the degree of deterioration of the battery.

Patent Literature 1 discloses a technique of diagnosing deterioration of a battery and notifying a timing for battery replacement based on a result of the diagnosis of the battery when the deterioration of the battery has progressed to a certain level or higher.

### CITATION LIST

### PATENT LITERATURE

Patent Literature 1: Japanese Patent No. 6681963

### SUMMARY OF INVENTION

### TECHNICAL PROBLEM

However, if the user can know the degree of deterioration of the battery before the timing for the battery replacement comes, the convenience of the aerosol generating apparatus is improved. As a parameter indicating the deterioration of the battery, the charging capacity is generally used. In a case of notifying the user of the degree of deterioration or the replacement of the battery, the convenience of the aerosol generating apparatus increases when expressions such as an inhalation time, the number of times of inhalation, and the like in addition to the charging capacity are familiar to the user of the aerosol generating apparatus.

The present invention provides a notification control device for an aerosol generating apparatus, a notification control method for the aerosol generating apparatus, and a control program for the aerosol generating apparatus that are capable of notifying a user of deterioration information on a battery by a highly-convenient method.

### SOLUTION TO PROBLEM

The present invention is a notification control device for an aerosol generating apparatus that generates an aerosol from an aerosol source by using electric power from a power supply, wherein
the notification control device is configured to:
obtain deterioration information on the power supply; and
output a notification of the deterioration information on the power supply by using a parameter different from a charging capacity.

In addition, the present invention is a notification control method for an aerosol generating apparatus that generates an aerosol from an aerosol source by using electric power from a power supply, the notification control method including:
a step of acquiring deterioration information on the power supply; and
a step of outputting a notification of the deterioration information on the power supply by using a parameter different from a charging capacity.

In addition, the present invention is a control program for an aerosol generating apparatus that generates an aerosol from an aerosol source by using electric power from a power supply, the control program causing a computer to perform a process comprising:
a step of acquiring deterioration information on the power supply; and
a step of outputting a notification of the deterioration information on the power supply by using a parameter different from a charging capacity.

In addition, the present invention is a notification control device for an aerosol generating apparatus that generates an aerosol from an aerosol source by using electric power from a power supply, wherein
the notification control device is configured to:
obtain deterioration information on the power supply; and
output a notification of the deterioration information on the power supply by using a graph.

In addition, the present invention is a notification control method for an aerosol generating apparatus that generates an aerosol from an aerosol source by using electric power from a power supply, the notification control method including:
a step of acquiring deterioration information on the power supply; and
a step of outputting a notification of the deterioration information on the power supply by using a graph.

In addition, the present invention is a control program for an aerosol generating apparatus that generates an aerosol from an aerosol source by using electric power from a power supply, the control program causing a computer to perform a process comprising:
a step of acquiring deterioration information on the power supply; and
a step of outputting a notification of the deterioration information on the power supply by using a graph.

### ADVANTAGEOUS EFFECTS OF INVENTION

According to the present invention, the user can appropriately grasp the deterioration information.

### BRIEF DESCRIPTION OF DRAWINGS

[FIG. 1] FIG. 1 is a schematic diagram illustrating a schematic configuration of a notification system 1.
[FIG. 2] FIG. 2 is a schematic diagram schematically illustrating a first configuration example of an aerosol generating apparatus 100.
[FIG. 3] FIG. 3 is a schematic diagram schematically illustrating a second configuration example of the aerosol generating apparatus 100.
[FIG. 4] FIG. 4 is an example of a screen displayed on a display device of an electronic device 30 in a case in which deterioration of a power supply portion 111 is notified by using the number of times of inhalation (a deterioration degree notification process).
[FIG. 5] FIG. 5 is an example of the screen displayed on the display device of the electronic device 30 in a case in which the deterioration of the power supply portion 111 is notified by using a graph (a deterioration degree notification process).
[FIG. 6] FIG. 6 is a flowchart for describing deterioration notification control performed by a processor of the electronic device 30.
[FIG. 7] FIG. 7 is an example of the screen displayed on the display device of the electronic device 30 in a normal state notification process.
[FIG. 8] FIG. 8 is an example of the screen displayed on the display device of the electronic device 30 in a replacement notification process.
[FIG. 9] FIG. 9 is another example of the screen displayed on the display device of the electronic device 30 in the deterioration degree notification process.
[FIG. 10] FIG. 10 is a schematic diagram schematically illustrating a third configuration example of the aerosol generating apparatus 100.

### DESCRIPTION OF EMBODIMENTS

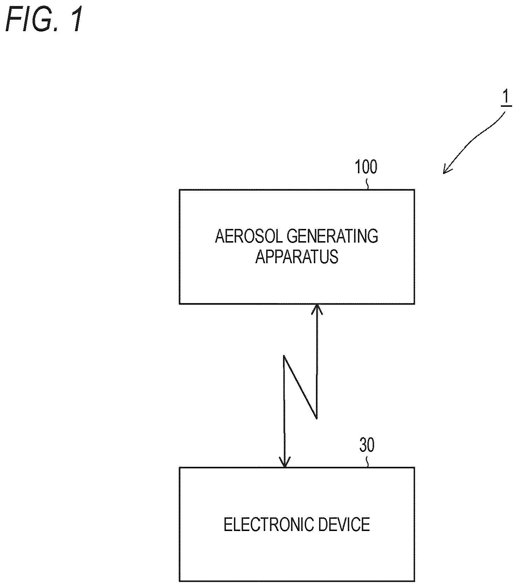

FIG. 1 is a schematic diagram illustrating a schematic configuration of a notification system 1. The notification system 1 is a system that notifies a user of an aerosol generating apparatus 100 of the degree of deterioration of a power supply portion of the aerosol generating apparatus 100. The notification system 1 includes the aerosol generating apparatus 100 carried by the user, and an electronic device 30 including a display device, such as a smartphone, a tablet terminal, or a personal computer. The electronic device 30 is configured to communicate with the aerosol generating apparatus 100 in a wired or wireless manner. Various kinds of information can be exchanged between the electronic device 30 and the aerosol generating apparatus 100.

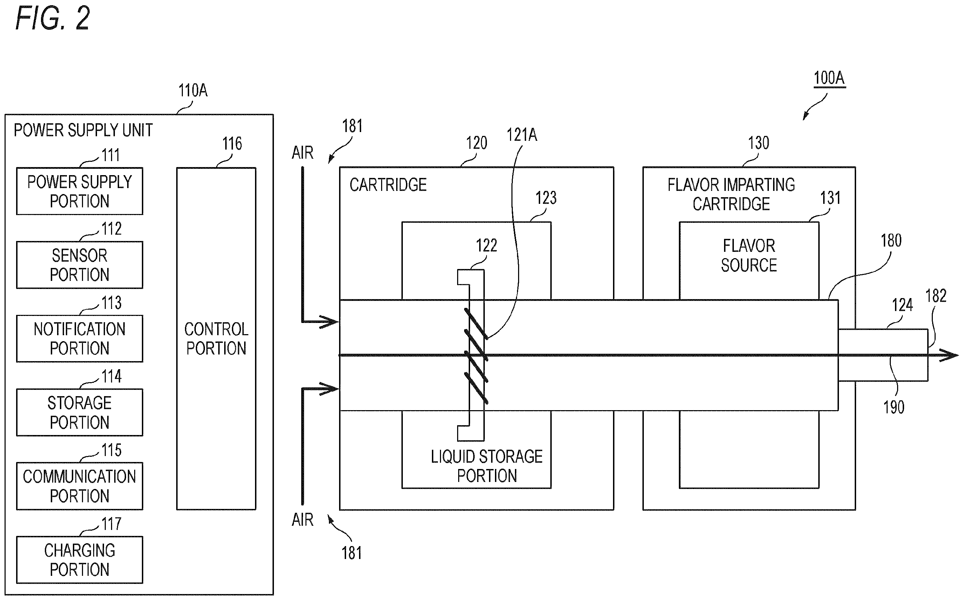

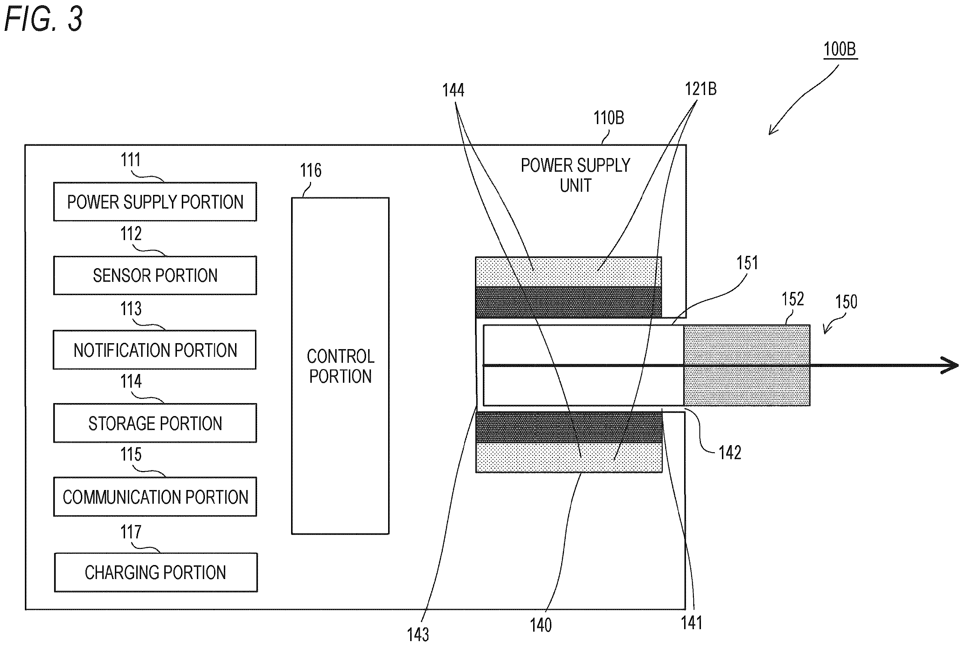

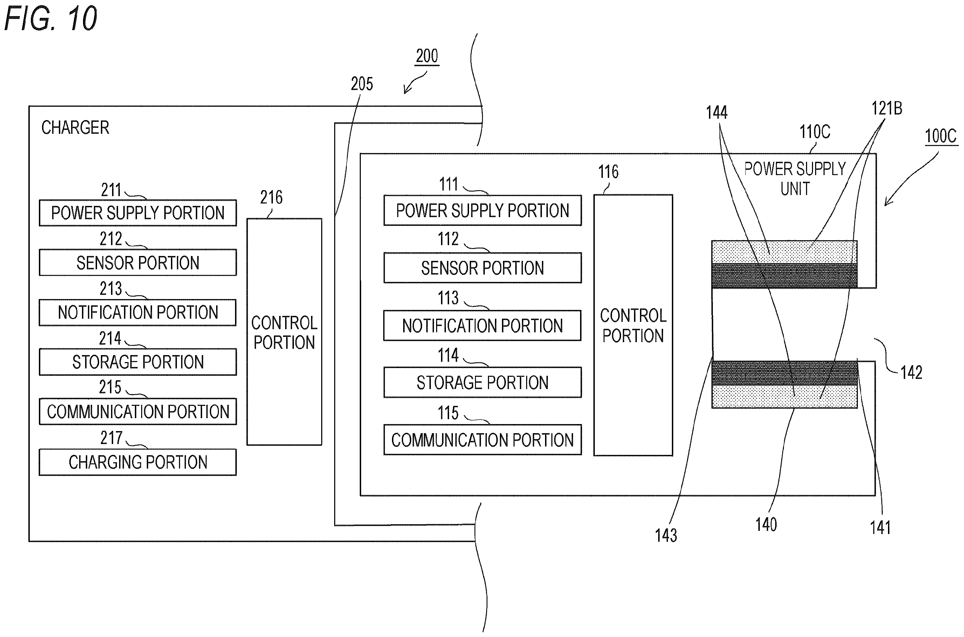

The aerosol generating apparatus 100 is an apparatus that atomizes an aerosol source to generate an aerosol by consuming electric power, and makes the generated aerosol inhalable. Although a configuration of the aerosol generating apparatus 100 includes various configurations and is not particularly limited, a typical configuration example of the aerosol generating apparatus 100 will be described below with reference to FIGs. 2 and 3. Further, another configuration example of the aerosol generating apparatus 100 will be described with reference to FIG. 10.

### (1) First Configuration Example

FIG. 2 is a schematic diagram schematically illustrating a first configuration example of the aerosol generating apparatus 100. As illustrated in FIG. 2, an aerosol generating apparatus 100A according to the present configuration example includes a power supply unit 110A, a cartridge 120, and a flavor imparting cartridge 130. The power supply unit 110A includes a power supply portion 111, a sensor portion 112, a notification portion 113, a storage portion 114, a communication portion 115, a control portion 116, and a charging portion 117. The cartridge 120 includes a heating portion 121A, a liquid guiding portion 122, and a liquid storage portion 123. The flavor imparting cartridge 130 includes a flavor source 131 and a mouthpiece 124. An air flow path 180 is formed in the cartridge 120 and the flavor imparting cartridge 130.

The power supply portion 111 stores the electric power. Further, the power supply portion 111 supplies the electric power to each constituent component of the aerosol generating apparatus 100A under the control of the control portion 116. The power supply portion 111 may be implemented by, for example, a rechargeable battery such as a lithium ion secondary battery.

The sensor portion 112 obtains various kinds of information regarding the aerosol generating apparatus 100A. As an example, the sensor portion 112 is implemented by a pressure sensor such as a condenser microphone, a flow rate sensor, a temperature sensor, or the like, and obtains a value associated with inhalation by the user. As another example, the sensor portion 112 is implemented by an input device that receives information input from the user, such as a button or a switch.

The notification portion 113 notifies the user of information. The notification portion 113 is implemented by, for example, a light emitting device that emits light, a display device that displays an image, a sound output device that outputs sound, a vibration device that vibrates, or the like.

The storage portion 114 stores various kinds of information for an operation of the aerosol generating apparatus 100A. The storage portion 114 is implemented by, for example, a nonvolatile storage medium such as a flash memory.

The communication portion 115 is a communication interface that can perform communication in accordance with any wired or wireless communication standard. As such a communication standard, for example, Wi-Fi (registered trademark) or Bluetooth (registered trademark) may be adopted.

The charging portion 117 steps up or steps down electric power supplied from an external power supply to control charging of the power supply portion 111. The charging portion 117 may be configured to receive the electric power when the external power supply such as an outlet or a mobile battery is connected to a charging terminal, or may be configured to receive the electric power supplied from the external power supply in a non-contact manner.

The control portion 116 functions as an arithmetic processing device and a control device, and controls overall operations in the aerosol generating apparatus 100A according to various programs. The control portion 116 is implemented by, for example, an electronic circuit such as a central processing unit (CPU) or a microprocessor.

The liquid storage portion 123 stores the aerosol source. The aerosol source is atomized to generate the aerosol. The aerosol source is, for example, a liquid such as water or a polyhydric alcohol such as glycerin and propylene glycol. The aerosol source may include a flavor ingredient derived from tobacco or non-tobacco. When the aerosol generating apparatus 100A is a medical inhaler such as a nebulizer, the aerosol source may contain a drug.

The liquid guiding portion 122 guides, from the liquid storage portion 123, the aerosol source which is a liquid stored in the liquid storage portion 123, and holds the aerosol source. The liquid guiding portion 122 is, for example, a wick formed by twisting a fiber material such as glass fiber or a porous material such as porous ceramic. In that case, the aerosol source stored in the liquid storage portion 123 is guided by a capillary effect of the wick.

The heating portion 121A heats the aerosol source to atomize the aerosol source to generate the aerosol. In the example illustrated in FIG. 2, the heating portion 121A is implemented by a coil and is wound around the liquid guiding portion 122. When the heating portion 121A generates heat, the aerosol source held in the liquid guiding portion 122 is heated and atomized, and the aerosol is generated. The heating portion 121A generates heat when supplied with the electric power from the power supply portion 111. As an example, the electric power may be supplied when the sensor portion 112 detects that the user starts inhalation and/or that predetermined information is input. Further, when the sensor portion 112 detects that the user finishes inhalation and/or that the predetermined information is input, the supply of the electric power may be stopped.

The flavor source 131 is a constituent component for imparting a flavor ingredient to the aerosol. The flavor source 131 may include a flavor ingredient derived from tobacco or non-tobacco.

The air flow path 180 is a flow path for air inhaled by the user. The air flow path 180 has a tubular structure in which an air inlet hole 181 that is an inlet of the air into the air flow path 180 and an air outlet hole 182 that is an outlet of the air from the air flow path 180 are set as both ends. In the middle of the air flow path 180, the liquid guiding portion 122 is disposed on an upstream side (a side closer to the air inlet hole 181), and the flavor source 131 is disposed on a downstream side (a side closer to the air outlet hole 182). The air flowing from the air inlet hole 181 as a result of the inhalation by the user is mixed with the aerosol generated by the heating portion 121A, and is transported to the air outlet hole 182 through the flavor source 131 as shown by an arrow 190. When the mixed fluid of the aerosol and the air passes through the flavor source 131, the flavor ingredient contained in the flavor source 131 is imparted to the aerosol.

The mouthpiece 124 is a member that is held in the mouth of the user during inhalation. The air outlet hole 182 is disposed in the mouthpiece 124. The user can take the mixed fluid of the aerosol and the air into the oral cavity by holding the mouthpiece 124 in the mouth and inhaling.

The configuration example of the aerosol generating apparatus 100A has been described above. It is needless to say that the configuration of the aerosol generating apparatus 100A is not limited to the above, and may adopt various configurations as exemplified below.

As an example, the aerosol generating apparatus 100A may not include the flavor imparting cartridge 130. In that case, the cartridge 120 is provided with the mouthpiece 124.

As another example, the aerosol generating apparatus 100A may include a plurality of types of aerosol sources. Further, other types of the aerosol may be generated by mixing a plurality of types of aerosol generated from the plurality of types of aerosol sources in the air flow path 180 and causing a chemical reaction.

A method for atomizing the aerosol source is not limited to heating by the heating portion 121A. For example, the method of atomizing the aerosol source may be vibratory atomization or induction heating.

### (2) Second Configuration Example

FIG. 3 is a schematic diagram schematically illustrating a second configuration example of the aerosol generating apparatus 100. As illustrated in FIG. 3, an aerosol generating apparatus 100B according to the present configuration example includes a power supply unit 110B. The power supply unit 110B includes the power supply portion 111, the sensor portion 112, the notification portion 113, the storage portion 114, the communication portion 115, the control portion 116, the charging portion 117, a heating portion 121B, a holding portion 140, and a heat insulation portion 144.

The power supply portion 111, the sensor portion 112, the notification portion 113, the storage portion 114, the communication portion 115, the control portion 116, and the charging portion 117 are substantially the same as the respective corresponding constituent components included in the aerosol generating apparatus 100A according to the first configuration example.

The holding portion 140 has an internal space 141, and holds a stick-type base material 150 while accommodating a part of the stick-type base material 150 in the internal space 141. The holding portion 140 has an opening 142 through which the internal space 141 communicates with the outside, and holds the stick-type base material 150 inserted into the internal space 141 from the opening 142. For example, the holding portion 140 is a cylindrical body having the opening 142 and a bottom portion 143 as a bottom surface, and defines the columnar internal space 141. The holding portion 140 also has a function of defining a flow path of air supplied to the stick-type base material 150. An air inlet hole, which is an inlet of the air to the flow path, is disposed, for example, in the bottom portion 143. On the other hand, an air outlet hole, which is an outlet of the air from the flow path, is the opening 142.

The stick-type base material 150 includes a base material portion 151 and an inhalation port portion 152. The base material portion 151 includes an aerosol source and a flavor source. In this configuration example, the aerosol source is not limited to a liquid, and may be a solid. The flavor source is a constituent component for imparting a flavor ingredient to the aerosol. The flavor source may include a flavor ingredient derived from tobacco or non-tobacco. In a state in which the stick-type base material 150 is held by the holding portion 140, at least a part of the base material portion 151 is accommodated in the internal space 141, and at least a part of the inhalation port portion 152 protrudes from the opening 142. When the user holds the inhalation port portion 152 protruding from the opening 142 in the mouth and inhales, the air flows into the internal space 141 from the air inlet hole (not shown), and reaches the mouth of the user together with the aerosol generated from the base material portion 151 and imparted with the flavor ingredient.

In the example illustrated in FIG. 3, the heating portion 121B is formed in a film shape, and is disposed to cover an outer periphery of the holding portion 140. When the heating portion 121B generates heat, the base material portion 151 of the stick-type base material 150 is heated from the outer periphery, and the aerosol is generated.

The heat insulation portion 144 prevents heat transfer from the heating portion 121B to other constituent components. For example, the heat insulation portion 144 is made of a vacuum heat insulating material or an aerogel heat insulating material.

The configuration example of the aerosol generating apparatus 100B has been described above. It is needless to say that the configuration of the aerosol generating apparatus 100B is not limited to the above, and may adopt various configurations as exemplified below.

As an example, the heating portion 121B may be formed in a blade shape and disposed to protrude from the bottom portion 143 of the holding portion 140 into the internal space 141. In this case, the blade-shaped heating portion 121B is inserted into the base material portion 151 of the stick-type base material 150, and heats the base material portion 151 of the stick-type base material 150 from the inside. As another example, the heating portion 121B may be disposed to cover the bottom portion 143 of the holding portion 140. In addition, the heating portion 121B may be implemented by a combination of two or more of a first heating portion covering the outer periphery of the holding portion 140, a blade-shaped second heating portion, and a third heating portion covering the bottom portion 143 of the holding portion 140. As still another example, the heating portion 121B may include an induction coil to which high-frequency electric power is supplied, and a susceptor through which an induction current (an eddy current) flows due to a magnetic flux generated by the induction coil and which converts the induction current into Joule heat (heat generation due to electric resistance), and may heat the stick-type base material 150 by so-called induction heating.

As another example, the holding portion 140 may include an opening and closing mechanism such as a hinge that opens and closes a part of an outer shell forming the internal space 141. The holding portion 140 may open and close the outer shell to sandwich and hold the stick-type base material 150 inserted into the internal space 141. In that case, the heating portion 121B may be provided at a sandwiching and holding place in the holding portion 140 and heat the stick-type base material 150 while pressing the stick-type base material 150.

The method for atomizing the aerosol source is not limited to heating by the heating portion 121B. For example, the method for atomizing the aerosol source may be induction heating.

The aerosol generating apparatus 100B may further include the heating portion 121A, the liquid guiding portion 122, the liquid storage portion 123, and the air flow path 180 according to the first configuration example, and the air outlet hole 182 of the air flow path 180 may also serve as the air inlet hole through which the air flows into the internal space 141. In this case, the mixed fluid of the aerosol generated by the heating portion 121A and the air flows into the internal space 141, is further mixed with the aerosol generated by the heating portion 121B, and reaches the oral cavity of the user.

A predetermined application program (a notification program) provided by a system administrator is installed in the electronic device 30 illustrated in FIG. 1. The electronic device 30 includes a processor such as a CPU and a memory, and the processor executes the application program to notify the user of deterioration information on the power supply portion 111 of the aerosol generating apparatus 100. The user can grasp the deterioration information on the power supply portion 111 of the aerosol generating apparatus 100 via the electronic device 30.

The notification of the deterioration information may be performed according to the degree of deterioration, or may be performed based on a predetermined criterion such as a predetermined time, the predetermined cumulative number of times of charging, and the predetermined cumulative number of times of inhalation. Further, the notification of the deterioration information may be performed in response to a request operation by the user.

The processor of the electronic device 30 receives the deterioration information on the power supply portion 111 from the control portion 116 of the aerosol generating apparatus 100, and displays the deterioration information on the power supply portion 111 on the display device of the electronic device 30.

The control portion 116 of the aerosol generating apparatus 100 may diagnose a deterioration state based on the ratio of a full charging capacity at the time of deterioration to a full charging capacity at the time of new product of the power supply portion 111, may diagnose the deterioration state based on internal resistance of the power supply portion 111, and may diagnose the deterioration state by another method.

The processor of the electronic device 30 notifies the user of the obtained deterioration state by using a parameter different from the charging capacity. The user can easily grasp the deterioration information by notifying the deterioration information on the power supply portion 111 with the parameter that is easy to understand for the user, and the convenience of the aerosol generating apparatus 100 is improved. The parameter is preferably a parameter that is familiar to the user of the aerosol generating apparatus 100, and is, for example, the number of times of inhalation, an inhalation time, the number of times of charging, or the number of times of replacement of the aerosol source.

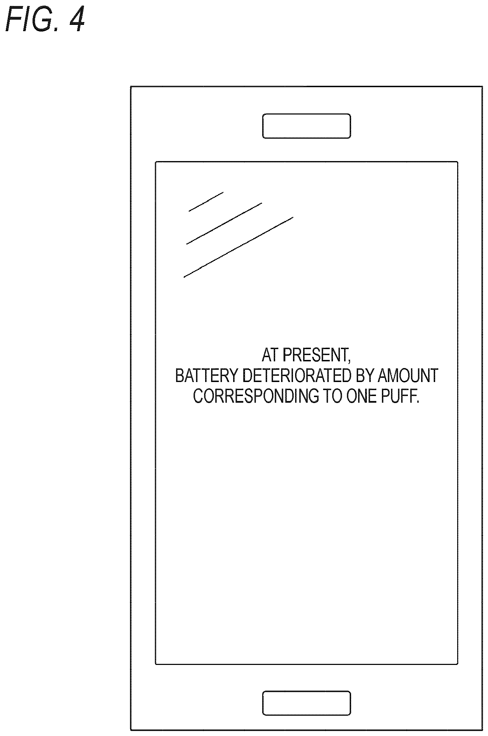

When the parameter is the number of times of inhalation, the processor of the electronic device 30 displays that the power supply portion 111 is deteriorated by an amount corresponding to one puff (one inhalation), for example. FIG. 4 is an example of a screen displayed on the display device of the electronic device 30 in a case in which the deterioration of the power supply portion 111 is notified by using the number of times of inhalation. Generally, in the aerosol generating apparatus, the number of times of puff (the number of times of inhalation) that can be performed by one charging is determined. Therefore, by being aware that the number of times of puff is reduced, the user can more directly feel that the power supply portion 111 is deteriorated.

When the parameter is the inhalation time, the processor of the electronic device 30 displays that the power supply portion 111 is deteriorated by an amount corresponding to one minute, for example. The inhalation time can be converted based on the number of times of inhalation by estimating a time per puff.

When the parameter is the number of times of charging, the processor of the electronic device 30 displays that the power supply portion 111 is deteriorated by an amount corresponding to a case in which the number of times of charging is ten, for example.

Generally, in the aerosol generating apparatus, the number of flavor imparting cartridges that can be used, and the number of stick-type base materials are determined by one charging. When the parameter is the number of flavor imparting cartridges or the number of stick-type base materials, the processor of the electronic device 30 displays that the power supply portion 111 is deteriorated by an amount corresponding to one flavor imparting cartridge (stick-type base material), for example.

In addition, the processor of the electronic device 30 may visualize the deterioration state of the power supply portion 111 by using a graph including a charging capacity at a time point when the power supply portion 111 is not deteriorated, a charging capacity at a time point when the notification is performed, and a charging capacity at a time point when replacement of the power supply portion 111 is notified. In this case, the processor of the electronic device 30 can display a parameter different from the charging capacity in the graph.

In this case, the parameter includes, for example, the cumulative inhalation time, the cumulative number of times of inhalation, and the cumulative number of times of charging. In other words, the graph includes any one of the cumulative inhalation time, the cumulative number of times of inhalation, and the cumulative number of times of charging.

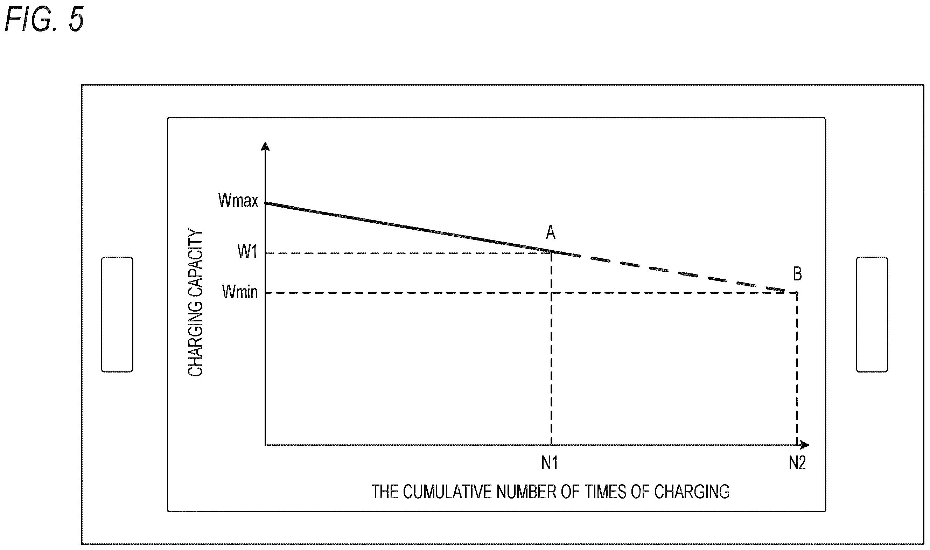

FIG. 5 is an example of the screen displayed on the display device of the electronic device 30 in a case in which the deterioration of the power supply portion 111 is notified by using the graph. In FIG. 5, the vertical axis represents the charging capacity, and the horizontal axis represents the cumulative number of times of charging. In the graph of FIG. 5, the charging capacity (for example, an initial value) at the time point when the power supply portion 111 is not deteriorated is Wmax, and the charging capacity (for example, a threshold value for ensuring device performance) at the time point when the replacement of the power supply portion 111 is notified is Wmin. In the present example, in order to simplify the description, it is assumed that the charging capacity linearly decreases as the cumulative number of times of charging increases, and specifically, a relational expression when the charging capacity decreases over time can be obtained by using a least square method or the like. In FIG. 5, a symbol A indicates the current time (a time point when the deterioration information is notified), and a symbol B indicates the time point when the replacement of the power supply portion 111 is notified.

In the graph of FIG. 5, when the charging capacity at the current time (the time point when the deterioration information is notified) is W 1, the processor of the electronic device 30 obtains the cumulative number of times of charging N1 stored in the storage portion 114 and calculates the cumulative number of times of charging N2 assumed at the time of the charging capacity Wmin. The cumulative number of times of charging N2 is calculated and obtained by using the relational expression, which is obtained by using the least square method or the like described above.

The processor of the electronic device 30 displays, on the graph, the cumulative number of times of charging N1 and the cumulative number of times of charging N2 assumed at the time of the charging capacity Wmin. The processor of the electronic device 30 may display the number of times of executable charging N3 until the replacement, which is a difference of N2 - N1, instead of the cumulative number of times of charging N2 or together with the cumulative number of times of charging N2. The number of times of executable charging N3 may be displayed in the graph, or may be displayed in the form of a text message such as "when the aerosol generating apparatus 100 continues to be used at the current frequency, the battery needs to be replaced after being charged N3 times". When the displayed parameter is a familiar expression for the user of the aerosol generating apparatus 100, the user can specifically grasp a timing for battery replacement.

In the example of FIG. 5, the horizontal axis indicates the cumulative number of times of charging, and the horizontal axis may indicate the cumulative inhalation time or the cumulative number of times of inhalation. When the horizontal axis of the graph indicates the cumulative inhalation time, the processor of the electronic device 30 displays "when the aerosol generating apparatus 100 continues to be used at the current frequency, the battery needs to be replaced after the aerosol generating apparatus 100 being inhaled N4 times", for example, and when the horizontal axis indicates the cumulative number of times of inhalation, the processor of the electronic device 30 displays "when the aerosol generating apparatus 100 continues to be used at the current frequency, the battery needs to be replaced after the aerosol generating apparatus 100 being inhaled N5 times", for example.

In addition, the processor of the electronic device 30 may display the number of days predicted for the replacement based on a log stored in the storage portion 114, the number of days that have passed from a start date of use to the present, and the like, regardless of the parameter of the horizontal axis of the graph.

When the aerosol generating apparatus 100 includes a liquid crystal display portion, it is not always necessary to notify the deterioration information on the display device of the electronic device 30, and it may be possible to notify the deterioration information on the liquid crystal display portion of the aerosol generating apparatus 100.

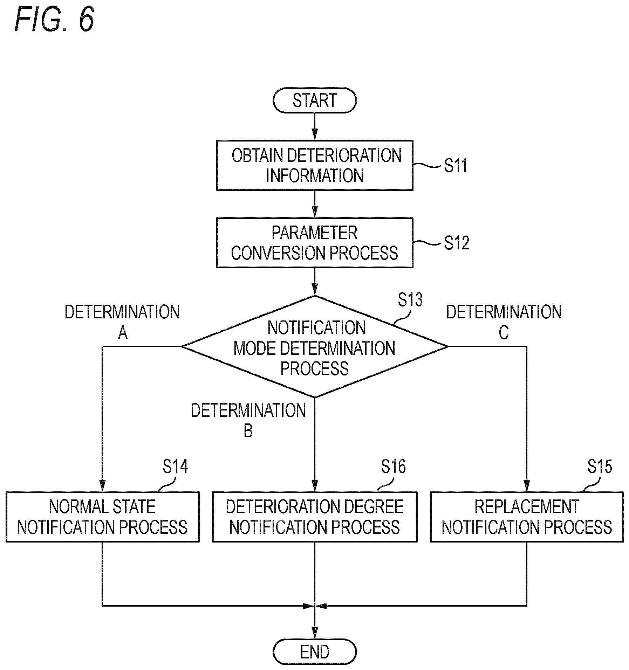

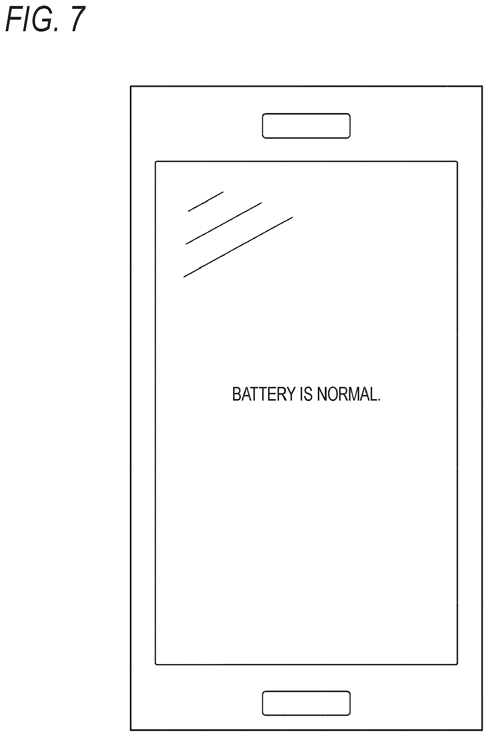

FIG. 6 is a flowchart for describing a deterioration notification method performed by the processor of the electronic device 30. Each of FIGs. 7, 8, and 9 is a diagram illustrating an example of the screen displayed on the display device of the electronic device 30.

First, the processor of the electronic device 30 obtains the deterioration information of the power supply portion 111 (S11). Subsequently, the processor of the electronic device 30 performs a parameter conversion process for converting the deterioration information into any one of the parameters described above that are familiar to the user (S12).

Subsequently, the processor of the electronic device 30 performs a notification mode determination process for determining a notification mode (S13). In the notification mode determination process, the notification mode is classified into, for example, three stages according to the degree of deterioration after parameter conversion. The appropriate deterioration information can be provided to the user by performing different notifications according to the degree of deterioration.

When the degree of deterioration after the parameter conversion is lower than a first threshold value (a determination A in FIG. 6), a normal state notification process is performed (S14). In the normal state notification process, information indicating that the power supply portion 111 is not deteriorated, in other words, information indicating that the power supply portion 111 is normal is notified. For example, as illustrated in FIG. 7, the text message "battery is normal" is displayed. Accordingly, the user can directly grasp that the power supply portion 111 is not deteriorated.

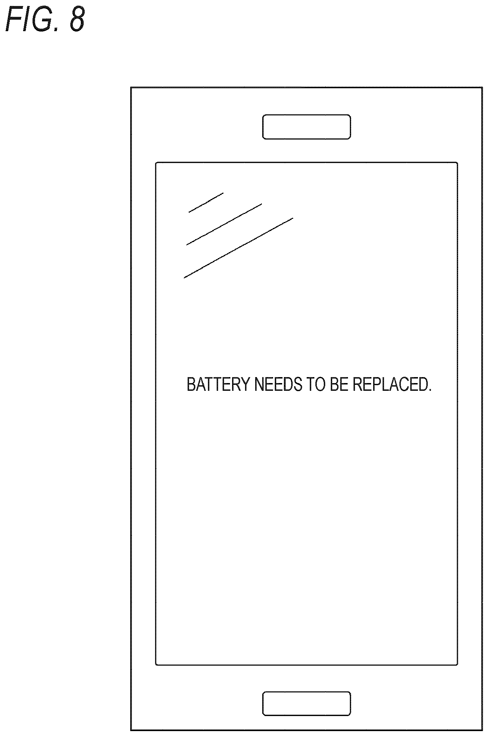

When the degree of deterioration is equal to or higher than a second threshold value that is a threshold value higher than the first threshold value (a determination C in FIG. 6), the replacement notification process is performed (S15). In the replacement notification process, information indicating that the power supply portion 111 seriously is deteriorated, in other words, information indicating that the power supply portion 111 needs to be replaced is notified. For example, as illustrated in FIG. 8, the text message "battery needs to be replaced" is displayed. Accordingly, the user can directly grasp that the replacement of the power supply portion 111 is necessary.

When the degree of deterioration is equal to or higher than the first threshold value and lower than the second threshold value (a determination B in FIG. 6), it is determined that the power supply portion 111 is deteriorated, and a deterioration degree notification process for displaying the deterioration information is performed (S16). In the deterioration degree notification process, as described above, the degree of deterioration is displayed by using the parameter that is familiar to the user. For example, as illustrated in FIG. 4, the processor of the electronic device 30 may display the text "at present, the battery is deteriorated by an amount corresponding to one puff", and as illustrated in FIG. 5, the degree of deterioration may be visualized by the graph.

The processor of the electronic device 30 may perform the notification in a plurality of stages according to the degree of deterioration in the deterioration degree notification process (S 16). For example, a case of dividing the notification into three stages will be described. In an initial stage of the deterioration such as a case in which the information indicating that the power supply portion 111 is normal is notified in a previous notification, it is preferable that information indicating that the deterioration of the power supply portion 111 has started. Accordingly, the user can directly grasp that the deterioration of the power supply portion 111 has started.

In addition, in a stage immediately before the replacement such as a case in which a difference between the degree of deterioration of the power supply portion 111 and the second threshold value is equal to or lower than a predetermined value, information indicating that the power supply portion 111 immediately needs to be replaced is preferably included. Accordingly, the user can directly grasp that the power supply portion 111 immediately needs to be replaced.

Between the initial stage and the stage immediately before the replacement, the normal notification in FIG. 4 or 5 is performed. In this way, by performing the notification in the three stages according to the degree of deterioration, the user can more appropriately grasp the degree of deterioration of the power supply portion 111. In the deterioration degree notification process (S16), the notification may be performed in four or more stages in a more detailed manner.

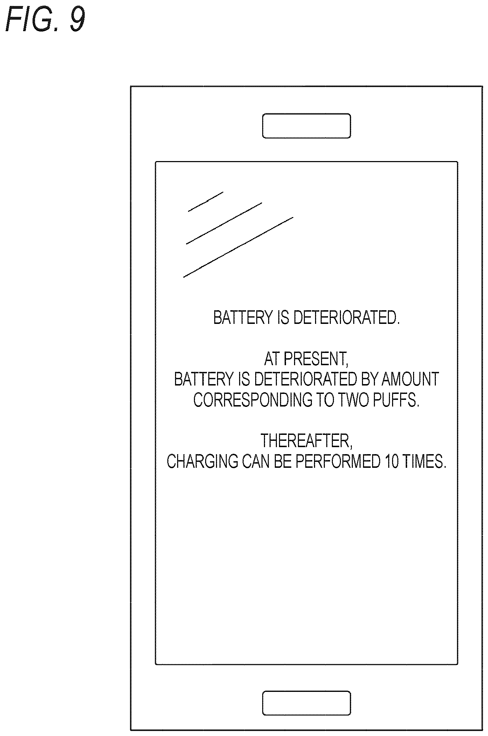

FIG. 9 is another example of the screen displayed on the display device of the electronic device 30 in the deterioration degree notification process (S16). For example, as illustrated in FIG. 9, the text message "Battery is deteriorated. At present, battery is deteriorated by amount corresponding to two puffs. Thereafter, charging can be performed 10 times." is displayed by the processor of the electronic device 30. In this way, by including the number of times of charging executable until the power supply portion 111 is replaced, the user can grasp that the replacement of the power supply portion 111 is approaching. Instead of the number of times of charging executable until the power supply portion 111 is replaced, any one of the inhalation time available until the power supply portion 111 is replaced, the number of times of inhalation executable until the power supply portion 111 is replaced, and the number of days until the power supply portion 111 is replaced may be displayed.

### (3) Third Configuration Example

FIG. 10 is a schematic diagram schematically illustrating a third configuration example of the aerosol generating apparatus 100. As illustrated in FIG. 10, a power supply unit 110C of an aerosol generating apparatus 100C according to the present configuration example is substantially the same as that of the aerosol generating apparatus 100B according to the second configuration example except that the charging portion 117 is not provided. In the aerosol generating apparatus 100C according to the present configuration example, the power supply unit 110C is rechargeable by a charger 200 that accommodates the power supply unit 110C or to which the power supply unit 110C can be attached and detached.

The charger 200 includes an aerosol generating apparatus-accommodating portion 205 that accommodates at least a part of the power supply unit 110C, a power supply portion 211, a sensor portion 212, a notification portion 213, a storage portion 214, a communication portion 215, a control portion 216, and a charging portion 217.

The power supply portion 211 stores the electric power. Further, the power supply portion 211 supplies the electric power to each constituent component of the charger 200 and supplies the electric power to the power supply portion 111 of the power supply unit 110C under the control of the control portion 216. In addition, the power supply portion 211 is rechargeable by an external power supply (not shown). The power supply portion 211 may be implemented by, for example, a rechargeable battery such as a lithium ion secondary battery. A power storage capacity of the power supply portion 211 is preferably more than that of the power supply portion 111 of the power supply unit 110C, and for example, the power storage capacity is set to a power storage capacity enough for charging the power supply portion 111 of the power supply unit 110C three times.

The sensor portion 212 obtains various kinds of information related to the charger 200. As an example, the sensor portion 212 obtains a charge amount (SOC) of the power supply portion 211.

The notification portion 213 notifies the user of information. The notification portion 213 is implemented by, for example, a light emitting device that emits light, a display device that displays an image, a sound output device that outputs sound, a vibration device that vibrates, or the like.

The storage portion 214 stores various kinds of information for an operation of the charger 200. The storage portion 214 is implemented by, for example, a nonvolatile storage medium such as a flash memory.

The communication portion 215 is a communication interface that can perform communication in accordance with any wired or wireless communication standard. As such a communication standard, for example, Wi-Fi (registered trademark) or Bluetooth (registered trademark) may be adopted.

The charging portion 217 steps up or steps down the electric power supplied from the external power supply to control charging of the power supply portion 211, and steps up or steps down the electric power supplied from the power supply portion 211 to the power supply portion 111 of the power supply unit 110C to control the charging of the power supply portion 111. The charging portion 217 may be configured to receive the electric power when the external power supply such as an outlet or a mobile battery is connected to a charging terminal, or may be configured to receive the electric power supplied from the external power supply in a non-contact manner.

The control portion 216 functions as an arithmetic processing device and a control device, and controls overall operations in the charger 200 according to various programs. The control portion 216 is implemented by, for example, an electronic circuit such as a central processing unit (CPU) or a microprocessor.

The configuration example of the charger 200 has been described above. It is needless to say that the configuration of the charger 200 is not limited to the above, and may adopt various configurations as exemplified below.

As an example, the charger 200 may be a stand-type charger that can be placed on a desk or the like, and may be a pocket-type charger by which the user can carry the aerosol generating apparatus 100C in an accommodated state.

The processor of the electronic device 30 may notify, on the display device of the electronic device 30, the deterioration information on the power supply portion 111 of the power supply unit 110C and/or deterioration information on the power supply portion 211 of the charger 200. When the deterioration information on the power supply portion 211 of the charger 200 is notified, the processor of the electronic device 30 receives the deterioration information on the power supply portion 211 from the control portion 216 of the charger 200, and displays the deterioration information on the power supply portion 211 on the display device of the electronic device 30. The processor of the electronic device 30 is the same as that of the aerosol generating apparatus 100 in that the processor notifies the user of the obtained deterioration state by using the parameter different from the charging capacity.

When the charger 200 includes a liquid crystal display portion, it is not always necessary to notify the deterioration information on the display device of the electronic device 30, and it may be possible to notify the deterioration information on the liquid crystal display portion of the charger 200.

The deterioration notification method described in the above embodiment can be achieved by executing a control program prepared in advance on a computer. The control program is stored in a computer-readable storage medium and is executed by being read from the storage medium. In addition, the control program may be provided in the form of being stored in a non-transitory storage medium such as a flash memory, and may be provided via a network such as the Internet. The computer that executes the control program may be the aerosol generating apparatus 100, may be the electronic device 30 such as a smartphone, a tablet terminal, or a personal computer that can communicate with the aerosol generating apparatus 100, may be the charger 200, and may be a server device that can communicate with the aerosol generating apparatus 100, the electronic device 30, the charger 200, and the like.

Although various embodiments have been described above with reference to the drawings, it is needless to say that the present invention is not limited to these examples. It is apparent to a person skilled in the art that various changes and modifications may be conceived within the scope described in the claims, and it is understood that the changes and the modifications naturally fall within the technical scope of the present invention. In addition, the constituent components described in the above embodiment may be optionally combined without departing from the spirit of the invention.

In the present description, at least the following matters are described. In parentheses, corresponding constituent components and the like in the embodiment described above are indicated, but the present invention is not limited thereto.
(1) A notification control device for an aerosol generating apparatus (the aerosol generating apparatus 100) that generates an aerosol from an aerosol source by using electric power from a power supply (the power supply portion 111),
   wherein the notification control device is configured to:
   obtain deterioration information on the power supply; and
   output a notification of the deterioration information on the power supply by using a parameter different from a charging capacity.

   According to (1), the user can easily grasp the deterioration information by notifying the deterioration information on the power supply with the parameter that is easy to understand for the user, and the convenience of the aerosol generating apparatus is improved.
(2) The notification control device for an aerosol generating apparatus according to (1), in which
   the parameter is a number of times of inhalation, an inhalation time, a number of times of charging, or a number of times of replacement of the aerosol source.
   According to (2), the parameter related to the aerosol generating apparatus is used, and thus the user can more directly feel that the power supply portion is deteriorated.
(3) The notification control device for an aerosol generating apparatus according to (1) or (2), in which
   the notification control device is configured to output different notifications depending on a degree of deterioration of the power supply.
   According to (3), it is possible to provide the appropriate deterioration information to the user.
(4) The notification control device for an aerosol generating apparatus according to (3), in which the notification control device is configured to:
   perform a first notification when the degree of deterioration of the power supply is lower than a first threshold value,
   perform a second notification when the degree of deterioration of the power supply is equal to or higher than the first threshold value and lower than a second threshold value, and
   perform a third notification when the degree of deterioration of the power supply is equal to or higher than the second threshold value.

   According to (4), by performing the notification in the three stages according to the degree of deterioration, the user can more appropriately grasp the degree of deterioration.
(5) The notification control device for an aerosol generating apparatus according to (4), in which
   the first notification includes information indicating that the power supply is not deteriorated.
   According to (5), the user can directly grasp that the power supply is not deteriorated.
(6) The notification control device for an aerosol generating apparatus according to (4) or (5), in which
   the third notification includes information indicating that the power supply needs to be replaced.
   According to (6), the user can directly grasp that the power supply needs to be replaced.
(7) The notification control device for an aerosol generating apparatus according to any one of (4) to (6), in which
   when a previous notification is the first notification, the second notification includes information indicating that the deterioration of the power supply has started.
   According to (7), the user can directly grasp that the deterioration of the power supply has started.
(8) The notification control device for an aerosol generating apparatus according to any one of (4) to (7), in which
   when a difference between the degree of deterioration of the power supply and the second threshold value is equal to or lower than a predetermined value, information indicating that the power supply immediately needs to be replaced is included.
   According to (8), the user can directly grasp that the power supply immediately needs to be replaced.
(9) The notification control device for an aerosol generating apparatus according to any one of (1) to (8), in which
   the notification includes any one of a number of times of charging executable until the power supply is replaced, an inhalation time available until the power supply is replaced, a number of times of inhalation executable until the power supply is replaced, and a number of days until the power supply is replaced.
   According to (9), the user can directly grasp that the replacement of the power supply is approaching.
(10) A notification control method for an aerosol generating apparatus (the aerosol generating apparatus 100) that generates an aerosol from an aerosol source by using electric power from a power supply (the power supply portion 111), the notification control method includes:
   a step of acquiring deterioration information on the power supply; and
   a step of outputting a notification of the deterioration information on the power supply by using a parameter different from a charging capacity.

   According to (10), the user can easily grasp the deterioration information by notifying the deterioration information on the power supply with the parameter that is easy to understand for the user.
(11) A control program for an aerosol generating apparatus (the aerosol generating apparatus 100) that generates an aerosol from an aerosol source by using electric power from a power supply (the power supply portion 111), the control program causing a computer to a process comprising:
   a step of acquiring deterioration information on the power supply; and
   a step of outputting a notification of the deterioration information on the power supply by using a parameter different from a charging capacity.

   According to (11), the user can easily grasp the deterioration information by notifying the deterioration information on the power supply with the parameter that is easy to understand for the user.
(12) A notification control device for an aerosol generating apparatus (the aerosol generating apparatus 100) that generates an aerosol from an aerosol source by using electric power from a power supply (the power supply portion 111),
   wherein the notification control device is configured to:
   obtain deterioration information on the power supply; and
   output a notification of the deterioration information on the power supply by using a graph.

   According to (12), the user can easily grasp the deterioration information by notifying the deterioration information on the power supply with the graph that is easy to understand for the user.
(13) The notification control device for an aerosol generating apparatus according to (12), wherein
   the notification is a graph including a charging capacity at a time point when the power supply is not deteriorated, a charging capacity at a time point when a notification is performed, and a charging capacity at a time point when replacement of the power supply is notified.
   According to (13), the deterioration information on the power supply can be visualized, and the user can further understand the deterioration information.
(14) The notification control device for an aerosol generating apparatus according to claim (12) or (13), in which
   the graph includes any one of a cumulative inhalation time, a cumulative number of times of inhalation, and a cumulative number of times of charging.
   According to (14), the cumulative inhalation time, the cumulative number of times of inhalation, or the cumulative number of times of charging is displayed, and thus the deterioration information is easily understood by the user.
(15) The notification control device for an aerosol generating apparatus according to any one of (12) to (14), in which
   the notification includes any one of a number of times of charging executable until the power supply is replaced, an inhalation time available until the power supply is replaced, a number of times of inhalation executable until the power supply is replaced, and a number of days until the power supply is replaced.
   According to (15), the user can directly grasp that the replacement of the power supply is approaching.
(16) A notification control method for an aerosol generating apparatus (the aerosol generating apparatus 100) that generates an aerosol from an aerosol source by using electric power from a power supply (the power supply portion 111), the notification control method including:
   a step of acquiring deterioration information on the power supply; and
   a step of outputting a notification of the deterioration information on the power supply by using a graph.

   According to (16), the user can easily grasp the deterioration information by notifying the deterioration information on the power supply with the graph that is easy to understand for the user.
(17) A control program for an aerosol generating apparatus (the aerosol generating apparatus 100) that generates an aerosol from an aerosol source by using electric power from a power supply (the power supply portion 111), the control program causing a computer to perform a process comprising:
   a step of acquiring deterioration information on the power supply; and
   a step of outputting a notification of the deterioration information on the power supply by using a graph.

According to (17), the user can easily grasp the deterioration information by notifying the deterioration information on the power supply with the graph that is easy to understand for the user.

### REFERENCE SIGNS LIST

100 aerosol generating apparatus
111 power supply portion (power supply)

## Claims

1. A notification control device for an aerosol generating apparatus that generates an aerosol from an aerosol source by using electric power from a power supply,
wherein the notification control device is configured to:
obtain deterioration information on the power supply; and
output a notification of the deterioration information on the power supply by using a parameter different from a charging capacity.

2. The notification control device for an aerosol generating apparatus according to claim 1, wherein
the parameter is a number of times of inhalation, an inhalation time, a number of times of charging, or a number of times of replacement of the aerosol source.

3. The notification control device for an aerosol generating apparatus according to claim 1 or 2, wherein
the notification control device is configured to output different notifications depending on a degree of deterioration of the power supply.

4. The notification control device for an aerosol generating apparatus according to claim 3, wherein the notification control device is configured to:
output a first notification when the degree of deterioration of the power supply is lower than a first threshold value,
output a second notification when the degree of deterioration of the power supply is equal to or higher than the first threshold value and lower than a second threshold value, and
output a third notification when the degree of deterioration of the power supply is equal to or higher than the second threshold value.

5. The notification control device for an aerosol generating apparatus according to claim 4, wherein
the first notification includes information indicating that the power supply is not deteriorated.

6. The notification control device for an aerosol generating apparatus according to claim 4 or 5, wherein
the third notification includes information indicating that the power supply needs to be replaced.

7. The notification control device for an aerosol generating apparatus according to any one of claims 4 to 6, wherein
when a previous notification is the first notification, the second notification includes information indicating that the deterioration of the power supply has started.

8. The notification control device for an aerosol generating apparatus according to any one of claims 4 to 7, wherein
when a difference between the degree of deterioration of the power supply and the second threshold value is equal to or lower than a predetermined value, information indicating that the power supply immediately needs to be replaced is included.

9. The notification control device for an aerosol generating apparatus according to any one of claims 1 to 8, wherein
the notification includes any one of a number of times of charging executable until the power supply is replaced, an inhalation time available until the power supply is replaced, a number of times of inhalation executable until the power supply is replaced, and a number of days until the power supply is replaced.

10. A notification control method for an aerosol generating apparatus that generates an aerosol from an aerosol source by using electric power from a power supply, comprising:
a step of acquiring deterioration information on the power supply; and
a step of outputting a notification of the deterioration information on the power supply by using a parameter different from a charging capacity.

11. A control program for an aerosol generating apparatus that generates an aerosol from an aerosol source by using electric power from a power supply, the control program causing a computer to perform a process comprising:
a step of acquiring deterioration information on the power supply; and
a step of outputting a notification of the deterioration information on the power supply by using a parameter different from a charging capacity.

12. A notification control device for an aerosol generating apparatus that generates an aerosol from an aerosol source by using electric power from a power supply,
wherein the notification control device is configured to:
obtain deterioration information on the power supply; and
output a notification of the deterioration information on the power supply by using a graph.

13. The notification control device for an aerosol generating apparatus according to claim 12, wherein
the notification is a graph including a charging capacity at a time point when the power supply is not deteriorated, a charging capacity at a time point when the notification is performed, and a charging capacity at a time point when replacement of the power supply is notified.

14. The notification control device for an aerosol generating apparatus according to claim 12 or 13, wherein
the graph includes any one of a cumulative inhalation time, a cumulative number of times of inhalation, and a cumulative number of times of charging.

15. The notification control device for an aerosol generating apparatus according to any one of claims 12 to 14, wherein
the notification includes any one of a number of times of charging executable until the power supply is replaced, an inhalation time available until the power supply is replaced, a number of times of inhalation executable until the power supply is replaced, and a number of days until the power supply is replaced.

16. A notification control method for an aerosol generating apparatus that generates an aerosol from an aerosol source by using electric power from a power supply, comprising:
a step of acquiring deterioration information on the power supply; and
a step of outputting a notification of the deterioration information on the power supply by using a graph.

17. A control program for an aerosol generating apparatus that generates an aerosol from an aerosol source by using electric power from a power supply, the control program causing a computer to perform a process comprising:
a step of acquiring deterioration information on the power supply; and
a step of outputting a notification of the deterioration information on the power supply by using a graph.
